# EUROPEAN PATENT SPECIFICATION

(11) **EP 2 719 595 B1**
(45) Date of publication and mention of the grant of the patent: **10.06.2015**
(21) Application number: 12188594.1
(22) Date of filing: 15.10.2012
(51) Int. Cl.: B60T 13/66, B60T 13/68, B60T 17/00, B60T 17/02

(54) **Compressed air supply device and method for operating a compressed air supply device**
Druckluftzufuhrvorrichtung und Verfahren für den Betrieb einer Druckluftzufuhrvorrichtung
Dispositif d'alimentation en air comprimé et procédé de fonctionnement d'un dispositif d'alimentation en air comprimé

(43) Date of publication of application: 16.04.2014
(73) Proprietor: KNORR-BREMSE Systeme für Nutzfahrzeuge GmbH, 80809 München (DE)
(72) Inventor: Krabot, Matyas, 2310 Szigetszentmiklós (HU); Balogh, Levente, 2319 Szigetszentmiklos (HU)
(74) Representative: Mattusch, Gundula

(56) References cited:
- EP-A1- 2 098 429
- WO-A1-03/013930
- DE-A1-102010 018 949
- US-A- 5 114 315

## Description

The present patent application relates to a method for operating a compressed air supply device for a utility vehicle having a first valve unit for pressurizing a compressor control port via a compressor control line, a second valve unit for opening a regeneration line, wherein the second valve unit is connected to the compressor control line, and an unloader valve unit for unloading a supply line, wherein a control port of the unloader valve unit is connected to the regeneration line.

Further, the present invention relates to a control unit for a compressed air supply device that is arranged to execute this method and a compressed air supply device having a first valve unit for pressurizing a compressor control port via a compressor control line, a second valve unit for opening a regeneration line, wherein the second valve unit is connected to the compressor control line, an unloader valve unit for unloading a supply line, wherein a control port of the unloader valve unit is connected to the regeneration line.

Compressed air supply devices usually comprise an air dryer cartridge with a drying agent to refine compressed air provided by a compressor. During the refining, oil, moisture, and other impurities are removed from the compressed air. The oil, moisture, and other impurities are stored within the air dryer cartridge. The refined compressed air is distributed to pneumatically driven subsystems, e.g., a service brake, a parking brake, and an air cushioning. The generation of refined compressed air is done during what is commonly referred to as a load phase.

The compressed air supply device should work in an energy efficient and reliable manner. An energy efficient operating mode is achieved by stopping the generation of compressed air when the subsystems supplied by the compressed air supply device do not need additional compressed air. Additionally, the oil, moisture, and other impurities stored in the air dryer cartridge are exhausted from time to time in order to increase the lifetime of the air dryer cartridge. Exhausting the oil, moisture, and other impurities regenerates the filter of the air dryer cartridge, while the dry air flow coming from the reservoirs evacuates the water adsorbed by the cartridge during load phase. During the regeneration of the air dryer cartridge, refined compressed air flows back through the air dryer cartridge, and the generation of refined compressed air stops during the regeneration of the air dryer cartridge. The regeneration of the air dryer cartridge is done in what is commonly referred to as a regeneration phase.

A compressor that supplies the compressed air to the compressed air supply device may be unloaded during the regeneration phase for energy saving reasons. Additionally, the compressor may be unloaded when a storage capacity for refined compressed air, e.g., within compressed air reservoirs of connected subsystems, is reached. US 5114315A describes a type of state of the art compressor control.

However, a supply line and/or an exhaust of the compressed air supply device may cool such that condensed water and even ice may form in the supply line and/or the exhaust when the compressor is unloaded. In particular, ice disturbs a reliable functioning of the compressed air supply device. It is therefore an object of the present invention to make the operation of a compressed air supply device more reliable.

This object is achieved with the features of the independent claims.

Advantageous aspects and further embodiments of the invention are given by the dependent claims.

The method for operating a compressed air supply device comprises the steps of
- pressurizing the compressor control port,
- opening the unloader valve unit,
- locking the unloader valve unit, and
- depressurizing the compressor control port.

This allows for a generation of hot compressed air that can be exhausted via the unloader valve unit both during and independent of a regeneration phase. The term "locking" describe that the actual state of the unloader valve unit becomes permanent, in particular that it becomes independent from the original control signal for opening and/or closing the unloader control valve unit. Closing the unloader valve unit is only possible when the "locking" is subsequently released.

Preferably, adjusting an opening pressure of a non-return valve that is arranged in the regeneration line to a value larger than an opening pressure of the unloader valve unit may be provided. This may allow for an open unloader valve unit when refined pressurized air is not flowing back through the air dryer cartridge.

Additionally, adjusting the opening pressure of the non-return valve to a value between 6 or 7 bar may be contemplated. In this way, a supply line of the compressed air supply device may be depressurized independent of a regeneration phase.

Furthermore, initiating a load phase by depressurizing the compressor control port and closing the unloader valve unit may be contemplated. The load phase may be the stable state of the compressed air supply device. The compressor may be loaded when the compressor control port is depressurized, and compressed air may flow through the air dryer cartridge when the unloader valve unit that may be coupled to the supply line is closed.

Preferably, initiating a regeneration phase by pressurizing the compressor control port and opening the unloader valve unit may be provided. The compressor that may be controlled via a pressure signal from the compressor control port may be unloaded when the compressor control port is pressurized. As a result, the compressor may stop the generation of compressed air in its unloaded state. At the same time, the open unloader valve unit may depressurize the supply line, and already refined compressed air may flow through the air dryer cartridge via a regeneration line.

In addition, initiating an energy saving phase by pressurizing the compressor control port and closing the unloader valve unit may be provided. The compressor control port may be pressurized independently from the unloader valve unit. In this way, the generation of compressed air by the compressor may be stopped via a pressure signal at the compressor control port. However, the closed unloader control valve may maintain the pressure level in the supply line. Therefore, the pressurized air in the supply line is not unnecessarily exhausted. Additionally, the refining process may be restarted faster when the compressor is reloaded because the pressure level in the supply line does not need to be restored.

Advantageously, the method allows for initiating a supply line ventilation phase by locking a control pressure of the unloader valve unit by closing the second valve unit for keeping the unloader valve unit opened while depressurizing the compressor control port. A supply line ventilation phase may be also called a compressor pipe ventilation phase. In this way, the open state of the unloader valve unit may be preserved independently from the pressure in the compressor control line or a regeneration air flow. Alternatively, the unloader valve unit may be locked by using a mechanical lock for keeping the unloader valve unit in its open state. Such a mechanical lock may, for example, block a motion of movable parts of the unloader valve unit. The mechanical lock may be electronically controlled and may comprise a solenoid.

The method may be further sophisticated by depressurizing the control port of the unloader valve unit via the first valve unit. In this way, an independent control of many different functions of the compressed air supply device is possible, wherein only a few valve units and few connecting pipes are needed. Therefore, the configuration of the compressed air supply device is simple.

The generic compressed air supply device may be further sophisticated by a control unit that is arranged to execute the previously described method.

In this way, the method according to the present invention may be realized as a device.

The compressed air supply device may be further sophisticated by a non-return valve that is arranged in the regeneration line, wherein an opening pressure of the non-return valve is larger than an opening pressure of the unloader valve unit.

The invention will now be explained by way of example quoting particularly preferred embodiments with reference to the accompanying drawings in which:
- Figure 1: shows a relevant part of an embodiment of a compressed air supply device; and
- Figure 2: shows a flow diagram that illustrates a method for operating a compressed air supply device.

In the drawings, like reference numbers are used to identify like or functionally similar elements. Elements in the figures are illustrated for simplicity and clarity and have not necessarily been drawn to scale. Because the illustrated embodiments of the present invention may for the most part be implemented using components known to those skilled in the art, details will not be explained in any greater extent than considered necessary for the understanding and appreciation of the underlying concepts of the present invention.

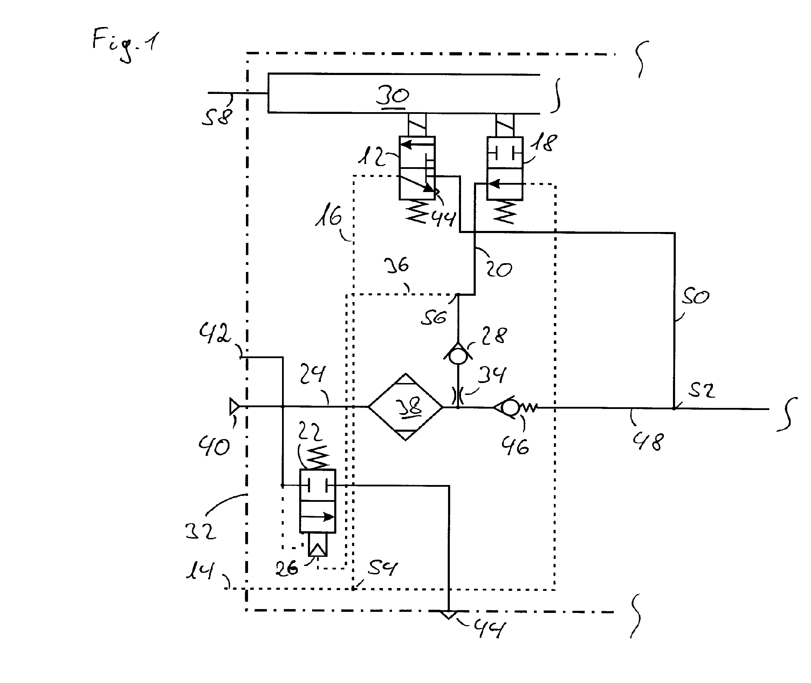

Figure 1 shows a relevant part of an embodiment of a compressed air supply device. The compressed air supply device 32 may be for a utility vehicle. The compressed air supply device 32 comprises a first valve unit 12, a second valve unit 18, an unloader valve unit 22, a non-return valve 28, a further non-return valve 46, an air dryer cartridge 38, and an optional throttle 34. The first valve unit 12 and the second valve unit 18 may be controlled by a control unit 30. The first valve unit 12 may be, for example, a 3/2 directional control valve having one port connected to an exhaust 44. However, it may be the case that two 2/2 directional control valves are used as the first valve unit 12. The second valve unit 18 may be, for example, a 2/2 directional control valve. The unloader valve unit 22 may be, for example, a 2/2 directional control valve. The first valve unit 12 and the second valve unit 18 may be, for example, solenoid valves. The first valve unit 12, the second valve unit 18, and the unloader valve unit 22 may be monostable, wherein the stable state of operation may be shown in Figure 1. The non-return valve 28 may have an opening pressure between 6 bar and 7 bar. The opening pressure of the non-return valve 28 may be adjustable. The non-return valve 28 may comprise, for example, an adjustable elastic element for providing the opening pressure.

The control unit 30 may be electrically connected to external systems via a CAN port 58. The compressed air supply device 32 may have a common exhaust 44, an inlet port 40, and a further inlet port 42. Additionally, the compressed air supply device 32 may comprise a compressor control port 14.

An external compressor for generating compressed air may be coupled to the inlet port 40 of the compressed air supply device 32. This external compressor not explicitly shown in Figure 1 may be controlled by the compressed air supply device 32 via a pneumatic signal that may be sent to the external compressor through the compressor control port 14 that may be coupled to a pneumatic control input of the external compressor. An additional source for compressed air of any kind may be connected to the further inlet port, e.g., in case of maintenance work.

The inlet port 40 and the further inlet port 42 may be connected via a supply line 24 with the air dryer cartridge 38. The air dryer cartridge 38 may be coupled to the further non-return valve 46 that allows a flow from the air dryer cartridge 38 to a feed line 48. Figure 1 does not explicitly show the connection of the feed line 48 to subsequent subsystems, e.g., service brakes, a parking brake, and a cushioning system. However, it is obvious for a person skilled in the art that the feed line 48 may end at a multi-circuit protection valve that may provide connection ports for said subsystems.

A branch line 50 may connect the first valve unit 12 to the feed line 48. The branch line 50 may begin/end at a first branching point 52. The compressor control port 14 may be connected via a compressor control line 16 to the first valve unit 12. The compressor control line 16 may begin/end at the first valve unit. The second valve unit 18 may be connected to the compressor control line 16 via a second branching point 54. A regeneration line 20 comprising the non-return valve 28 and the optional throttle 34 may connect the second valve unit 18 to the supply line 24. The non-return valve 28 may prevent an air flow from the supply line 24 to the second valve unit 18. The unloader valve unit 22 may comprise a pneumatic control port 26 that is pneumatically connected to the regeneration line 20 via a connection line 36. The connection line 36 may begin/end at a third branching point 56. The unloader valve unit 22 may act as a governor and may release pressure via the exhaust 44 when an extreme increase of pressure within the supply line 24 occurs.

Figure 1 does not necessarily show all structural components of the complete compressed air supply device 32. For example, it is well known to a person skilled in the art that the complete compressed air supply device 32 may comprise additional structural members, e.g., a multi-circuit protection valve and/or a compressed air reservoir, that are not explicitly shown in Figure 1. The possibility of further structural members within the compressed air supply device 32 is indicated by the symbol "s" that denotes the possible continuation of the shown relevant part of the compressed air supply device.

During a load phase, the external compressor generates compressed air. The compressed enters the compressed air supply device 32 at the inlet port 40. The compressed air flows via the supply line 24 to the air dryer cartridge 38 and from the air dryer cartridge 38 via the further non-return valve 46 to the feed line 48. The air dryer cartridge 38 may contain a drying agent. Oil, moisture, and other impurities may be separated from the compressed air within the air dryer cartridge. The refined compressed air flows from the air dryer cartridge 38 to the feed line 48 via the further non-return valve 46 that may prevent a backflow from the feed line to the air dryer cartridge 38. The oil, moisture, and other impurities may be stored within the air dryer cartridge 38. During the load phase, the first valve unit 12, the second valve unit 18, and the unloader valve unit 22 may be in their stable state of operation shown in Figure 1.

At the end of the load phase, the external compressor may be unloaded, and an energy saving phase or a regeneration phase may start. The energy saving phase may be initiated by switching the first valve unit 12. The switching may be electrically induced by the control unit 30. When the first valve unit 12 is switched, the feed line 48 may be connected to the compressor control port 14, and a pressure signal to unload the compressor may be generated.

When the second valve unit is not switched, the compressed air supply device 32 is in an energy saving phase. When the second valve unit 18 is additionally switched, a regeneration phase is initiated. During a regeneration phase, refined compressed air flows from the feed line 48 via the first valve unit 12 and the second valve unit 18 into the regeneration line 20. Due to the connection between the regeneration line 20 and the control port 26, the unloader valve unit 22 opens. The refined compressed air flows through the non-return valve 28 and through the air dryer cartridge 38. The oil, moisture, and other impurities stored within the air dryer cartridge 38 during a load phase are collected by the refined compressed air and exhausted at the exhaust 44 via the open unloader valve unit 22.

The external compressor may be loaded again by switching the first valve unit 12 back to its stable state of operation. When the second valve unit 18 is switched back to its stable state of operation before the valve unit 12 is switched back, the unloader valve unit 22 becomes locked in its actual state of operation. In particular, the unloader valve unit 22 may be locked open. Switching back the first valve unit 12 depressurizes the compressor control port and may bring the external compressor back to load. The external compressor generates hot compressed air that flows into the compressed air supply device 32 at the inlet port 40. However, the generated hot compressed air is directly exhausted via the open unloader valve unit 22 while heating up the supply line 24 and the exhaust 44. This may prevent the exhaust 44 and/or the supply line 24 from freezing due to condensed water that may fall out/remain within the exhaust 44 and/or the supply line 24. The direct exhaust of hot compressed air may be called a heating phase.

It may be possible to initiate the heating phase on a temperature basis. For example, the heating phase may be initiated when the temperature at the exhaust 44 and/or the supply line 24 is below an adjustable threshold Tₘᵢₙ. It may be possible to provide temperature sensors at the exhaust 44 and/or the supply line 24 for measuring the temperature. The temperature sensors may be coupled to the control unit 30, and the control unit 30 may check for the threshold.

It may be possible to initiate the heating phase on a time basis. For example, the heating phase may be initiated when an adjustable time tₘₐₓ has passed since the last heating phase ended and/or the exhaust 44 was used during a regeneration phase. It may be possible to adjust the time tₘₐₓ based on a measured temperature.

It may be possible to interrupt a regeneration phase from time to time by a heating phase to reheat the exhaust 44 and/or the supply line. The interruption interval may be controlled by the control unit 30 based on time and/or temperature values.

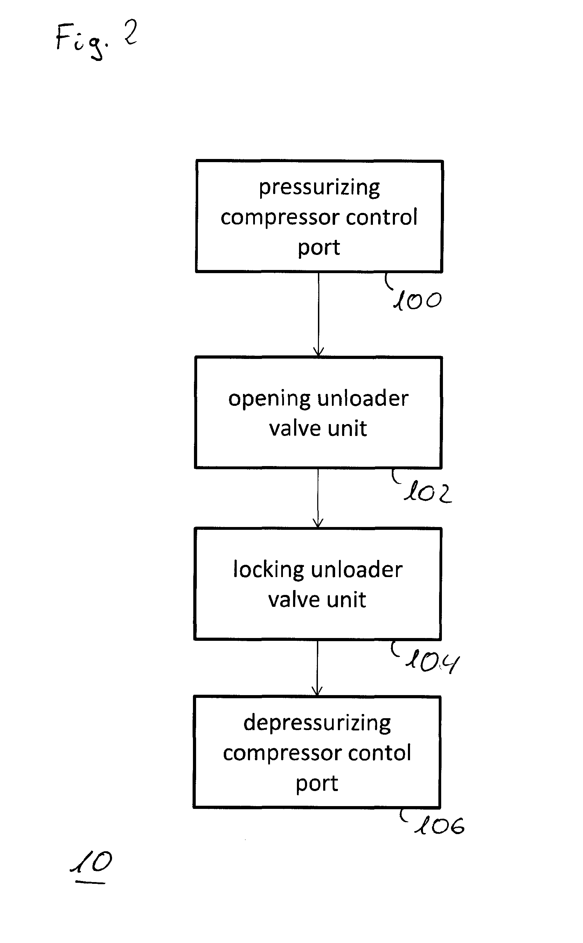

Figure 2 shows a flow diagram that illustrates a method for operating a compressed air supply device. The method 10 may comprise a step of "pressurizing the compressor control port" 100. This step may be the first step, and it may be executed, for example, by switching the first valve unit to its unstable state of operation. The next step "opening the unloader valve" 102 may be the second step, and it may be executed, for example, by switching the second valve unit 18 to its unstable state of operation when the first valve unit 12 is already switched. However, the first and second steps may be executed either simultaneously or in a different sequence. The following step "locking the unloader valve unit" 104 may be the third step, and it may be executed by switching back the second valve unit 18 to its stable state of operation. The last step "depressurizing the compressor control port" 106 may be the fourth step, and it may be executed by switching the first valve unit 12 back to its stable state of operation.

The features of the invention disclosed in the above description, the drawings as well as in the claims may be important for the realisation of the invention individually or in any combination.

### List of reference symbols:

- 10: method
- 12: first valve unit
- 14: compressor control port
- 16: compressor control line
- 18: second valve unit
- 20: regeneration line
- 22: unloader valve unit
- 24: supply line
- 26: control port
- 28: non-return valve
- 30: control unit
- 32: compressed air supply device
- 34: throttle
- 36: connection line
- 38: air dryer cartridge
- 40: inlet port
- 42: further inlet port
- 44: exhaust
- 46: further non-return valve
- 48: feed line
- 50: branch line
- 52: first branching point
- 54: second branching point
- 56: third branching point
- 58: CAN port
- 100: pressurizing the compressor control port
- 102: opening the unloader valve unit
- 104: locking the unloader valve unit
- 106: depressurizing the compressor control port

## Claims

1. A method (10) for operating a compressed air supply device (32) having
- a first valve unit (12) for pressurizing a compressor control port (14) via a compressor control line (16),
- a second valve unit (18) for opening a regeneration line (20), wherein the second valve unit (18) is connected to the compressor control line (16), and
- an unloader valve unit (22) for unloading a supply line (24), wherein a control port (26) of the unloader valve unit (22) is connected to the regeneration line (20),
comprising the steps of
- pressurizing the compressor control port (14),
- opening the unloader valve unit (22),
- locking the unloader valve unit (22), and
- depressurizing the compressor control port (14).

2. The method (10) according claim 1, **characterized by** adjusting an opening pressure of a non-return valve (28) that is arranged in the regeneration line (20) to a value larger than an opening pressure of the unloader valve unit (22).

3. The method (10) according to claim 2, **characterized by** adjusting the opening pressure of the non-return valve (28) to a value between 6 or 7 bar.

4. The method (10) according to one of the preceding claims, **characterized by** initiating a load phase by depressurizing the compressor control port (14) and closing the unloader valve unit (22).

5. The method (10) according to one of the preceding claims, **characterized by** initiating a regeneration phase by pressurizing the compressor control port (14) and opening the unloader valve unit (22).

6. The method (10) according to one of the preceding claims, **characterized by** initiating an energy saving phase by pressurizing the compressor control port (14) and closing the unloader valve unit (22).

7. The method (10) according to one of the preceding claims, **characterized by** initiating a supply line ventilation phase by locking a control pressure of the unloader valve unit (22) by closing the second valve unit (18) for keeping the unloader valve unit (22) opened while depressurizing the compressor control port (14).

8. The method according to one of the preceding claims, **characterized by** depressurizing the control port (26) of the unloader valve unit (22) via the first valve unit (12).

9. A control unit (30) for a compressed air supply device (32) that is arranged to execute the method (10) according one of the preceding claims.

10. A compressed air supply device (32) having
- a first valve unit (12) for pressurizing a compressor control port (14) via a compressor control line (16),
- a second valve unit (18) for opening a regeneration line (20), wherein the second valve unit (18) is connected to the compressor control line (16),
- an unloader valve unit (22) for unloading a supply line (24), wherein a control port (26) of the unloader valve unit (22) is connected to the regeneration line (20),
**characterized by** a control unit (30) according to claim 9.

11. The compressed air supply device (30) according to claim 10, **characterized by** a non-return valve (28) that is arranged in the regeneration line (20), wherein an opening pressure of the non-return valve (28) is larger than an opening pressure of the unloader valve unit (22).

## Patentansprüche

1. Verfahren (10) zum Betreiben einer Druckluft-Versorgungsvorrichtung (32) mit
- einer ersten Ventileinheit (12) zur Druckbeaufschlagung eines Verdichter-Steueranschlusses (14) über eine Verdichter-Steuerleitung (16),
- einer zweiten Ventileinheit (18) zum Öffnen einer Regenerierungsleitung (20), wobei die zweite Ventileinheit (18) mit der Verdichter-Steuerleitung (16) verbunden ist, und
- einer Druckregler-Ventileinheit (22) zur Druckentlastung einer Zuführleitung (24), wobei ein Steueranschluss (26) der Druckregler-Ventileinheit (22) mit der Regenerierungsleitung (20) verbunden ist,
welches die folgenden Schritte umfasst:
- Druckbeaufschlagung des Verdichter-Steueranschlusses (14),
- Öffnen der Druckregler-Ventileinheit (22),
- Verriegeln der Druckregler-Ventileinheit (22) und
- Druckentlastung des Verdichter-Steueranschlusses (14).

2. Verfahren (10) nach Anspruch 1, **gekennzeichnet durch** die Einstellung eines Öffnungsdrucks eines Rückschlagventils (28), das in der Regenerierungsleitung (20) angeordnet ist, auf einen Wert, der höher ist als en Öffnungsdruck der Druckregler-Ventileinheit (22).

3. Verfahren (10) nach Anspruch 2, **gekennzeichnet durch** die Einstellung des Öffnungsdrucks des Rückschlagventils (28) auf einen Wert zwischen 6 oder 7 bar.

4. Verfahren (10) nach einem der vorhergehenden Ansprüche, **gekennzeichnet durch** die Einleitung einer Belastungsphase **durch** Druckentlastung des Verdichter-Steueranschlusses (14) und Schließen der Druckregler-Ventileinheit (22).

5. Verfahren (10) nach einem der vorhergehenden Ansprüche, **gekennzeichnet durch** die Einleitung einer Regenerierungsphase **durch** Druckbeaufschlagung des Verdichter-Steueranschlusses (14) und Öffnen der Druckregler-Ventileinheit (22).

6. Verfahren (10) nach einem der vorhergehenden Ansprüche, **gekennzeichnet durch** die Einleitung einer Energiesparphase **durch** Druckbeaufschlagung des Verdichter-Steueranschlusses (14) und Schließen der Druckregler-Ventileinheit (22).

7. Verfahren (10) nach einem der vorhergehenden Ansprüche, **gekennzeichnet durch** die Einleitung einer Phase zur Belüftung der Versorgungsleitung, indem ein Steuerdruck der Druckregler-Ventileinheit (22) **dadurch** gesperrt wird, dass die zweite Ventileinheit (18) geschlossen wird, um die Druckregler-Ventileinheit (22) geöffnet zu halten, während der Verdichter-Steueranschluss (14) drucklos gemacht wird.

8. Verfahren (10) nach einem der vorhergehenden Ansprüche, **gekennzeichnet durch** die Druckentlastung des Steueranschlusses (26) der Druckregler-Ventileinheit (22) über die erste Ventileinheit (12).

9. Steuereinheit (30) für eine Druckluft-Versorgungsvorrichtung (32), die zur Durchführung des Verfahrens (10) nach einem der vorhergehenden Ansprüche aufgebaut ist.

10. Druckluft-Versorgungsvorrichtung (32) mit
- einer ersten Ventileinheit (12) zur Druckbeaufschlagung eines Verdichter-Steueranschlusses (14) über eine Verdichter-Steuerleitung (16),
- einer zweiten Ventileinheit (18) zum Öffnen einer Regenerierungsleitung (20), wobei die zweite Ventileinheit (18) mit der Verdichter-Steuerleitung (16) verbunden ist, und
- einer Druckregler-Ventileinheit (22) zur Druckentlastung einer Zuführleitung (24), wobei ein Steueranschluss (26) der Druckregler-Ventileinheit (22) mit der Regenerierungsleitung (20) verbunden ist,
**gekennzeichnet durch** eine Steuereinheit (30) nach Anspruch 9.

11. Druckluft-Versorgungsvorrichtung (30) nach Anspruch 10, **gekennzeichnet durch** ein Rückschlagventil (28), das in der Regenerierungsleitung (20) angeordnet ist, wobei ein Öffnungsdruck des Rückschlagventils (28) höher ist als ein Öffnungsdruck der Druckregler-Ventileinheit (22).

## Revendications

1. Procédé (10) pour faire fonctionner un dispositif (32) d'alimentation en air comprimé ayant
- une première unité (12) de vanne pour mettre en pression un orifice (14) de commande de compresseur par l'intermédiaire d'une ligne (16) de commande de compresseur,
- une deuxième unité (18) de vanne pour ouvrir une ligne (20) de régénération, la deuxième unité (18) de vanne étant reliée à la ligne (16) de commande de compresseur, et
- une unité (22) de vanne de décompresseur pour décomprimer une ligne (24) d'alimentation, un orifice (26) de commande de l'unité (22) de vanne de décompresseur étant reliée à la ligne (20) de régénération,
comprenant les stades de
- mise en pression de l'orifice (14) de commande de compresseur,
- ouverture de l'unité (22) de vanne de décompresseur,
- verrouillage de l'unité (22) de vanne de décompresseur, et
- dépressurisation de l'orifice (14) de _commande de compresseur.

2. Procédé (10) suivant la revendication 1, **caractérisé par** un réglage de la pression d'ouverture d'un clapet (28) anti-retour, qui est monté dans la ligne (20) de régénération, à une valeur plus grande qu'une pression d'ouverture de l'unité (22) de vanne de décompresseur.

3. Procédé (10) suivant la revendication 2, **caractérisé par** un réglage de la pression d'ouverture du clapet (28) anti-retour à une valeur comprise entre 6 ou 7 bar.

4. Procédé (10) suivant l'une des revendications précédentes, **caractérisé en ce que** l'on fait débuter une phase de charge, en dépressurisant l'orifice (14) de commande de compresseur et en fermant l'unité (22) de vanne de décompresseur.

5. Procédé (10) suivant l'une des revendications précédentes, **caractérisé en ce que** l'on fait débuter une phase de régénération, en mettant en pression l'orifice (14) de commande de compresseur et en ouvrant l'unité (22) de vanne de décompresseur.

6. Procédé (10) suivant l'une des revendications précédentes, **caractérisé en ce que** l'on fait débuter une phase d'économie d'énergie, en mettant en pression l'orifice (14) de commande de compresseur et en fermant l'unité (22) de vanne de décompresseur.

7. Procédé (10) suivant l'une des revendications précédentes, **caractérisé en ce que** l'on fait débuter une phase de ventilation de la ligne d'alimentation, en verrouillant une pression de commande de l'unité (22) de vanne de décompresseur en fermant la deuxième unité (18) de vanne pour maintenir l'unité (22) de vanne de décompresseur ouverte tout en dépressurisant l'orifice (22) de commande de décompresseur.

8. Procédé (10) suivant l'une des revendications précédentes, **caractérisé par** une dépressurisation de l'orifice (26) de commande de l'unité (22) de vanne de décompresseur par l'intermédiaire de la première unité (12) de vanne.

9. Unité (30) de commande d'un dispositif (32) d'alimentation en air comprimé, qui est agencée pour exécuter le procédé (10) suivant l'une des revendications précédentes.

10. Dispositif (32) d'alimentation en air comprimé ayant
- une première unité (12) de vanne pour mettre en pression un orifice (14) de commande de compresseur par l'intermédiaire d'une ligne (16) de commande de compresseur,
- une seconde unité (18) de vanne pour ouvrir une ligne (20) de régénération, la deuxième unité (18) de vanne étant reliée à la ligne (16) de commande de compresseur,
- une unité (22) de vanne de décompresseur pour décomprimer une ligne (24) d'alimentation, un orifice (26) de commande de l'unité (22) de vanne de décompresseur étant relié à la ligne (20) de régénération,
**caractérisé par** une unité (30) de commande suivant la revendication 9.

11. Dispositif (30) d'alimentation en air comprimé suivant la revendication 10,
**caractérisé par** un clapet (28) anti-retour qui est monté dans la ligne (20) de régénération, une pression d'ouverture du clapet (28) anti-retour étant plus grande qu'une pression d'ouverture de l'unité (22) de vanne de décompresseur.
